# FASCICULE DE BREVET EUROPEEN

(11) **EP 3 802 377 B1**
(45) Date de publication et mention de la délivrance du brevet: **25.06.2025**
(21) Numéro de dépôt: 19725732.2
(22) Date de dépôt: 23.05.2019
(51) Int. Cl.: B65G 47/08, B65G 47/82

(54) **TRANSFERT DE PRODUITS EN ENSERREMENT VERS OU DEPUIS UNE SURFACE D'ACCUMULATION**
ÜBERFÜHREN VON PRODUKTEN DURCH EINFASSING AUS ODER ZU EINEM SPEICHERBEREICH
TRANSFER OF PRODUCT BY TIGHTENING FROM OR TO AN ACCUMULATION SURFACE

(30) Priorité: 29.05.2018 FR 1854583
(43) Date de publication de la demande: 14.04.2021
(73) Titulaire: SIDEL PARTICIPATIONS, 76930 Octeville-sur-Mer (FR)
(72) Inventeur: GEHIN, Anthony, 67116 REICHSTETT (FR); BERGER, Julien, 67116 REICHSTETT (FR); HENNINGER, Raphaël, 67116 REICHSTETT (FR)
(74) Mandataire: Sidel Group
(86) Numéro de dépôt international: PCT/EP2019/063355
(87) Numéro de publication internationale: WO 2019/228901

(56) Documents cités:
- WO-A1-2012/056145
- WO-A1-2018/065721
- WO-A1-2019/129966
- BE-A3- 1 013 751
- FR-A1- 2 993 870

## Description

La présente invention entre dans le domaine du convoyage de produits au sein d'une ligne industrielle de traitement en continu desdits produits, en particulier du transfert de produits vers ou depuis une surface d'accumulation.

De tels produits peuvent être, de façon non limitative, des récipients tels des bouteilles, cannettes, briques cartonnées, ou encore de tels récipients regroupés au sein de boîtes, caisses, cartons ou fardeaux.

De manière connue, de tels produits sont déplacés le long de ladite ligne industrielle, entre des postes successifs de traitement, au moyen de convoyeurs adaptés, essentiellement du type à bande sans fin. De plus, lesdits produits sont traités et convoyés selon une file ou plusieurs files parallèles, à savoir de façon unifilaire ou plurifilaire. En outre, au cours de ce convoyage, les produits de chaque file peuvent être agencés de façon spécifique, notamment espacés et/ou orientés.

Généralement, afin d'assurer la production en continu d'une telle ligne industrielle, malgré l'arrêt d'un poste de traitement ou pour des raisons de cadences différentes de traitement entre deux postes, on prévoit une ou plusieurs zones d'accumulation desdits produits, chaque zone d'accumulation assurant le stockage provisoire d'une quantité variable de produits entre un poste situé en amont et un poste situé en aval par rapport à ladite zone d'accumulation.

Selon une configuration particulière, une telle zone d'accumulation peut se présenter sous forme d'une surface d'accumulation, permettant de recevoir et mouvoir lesdits produits regroupés en colonnes, depuis une entrée jusqu'à une sortie. En amont, un convoyeur d'entrée alimente ladite surface d'accumulation au niveau d'un bord d'entrée via une première zone de transit, selon une ou plusieurs files de produits, tandis qu'en aval, un convoyeur de sortie reçoit une ou plusieurs colonnes de produits depuis ladite surface d'accumulation via une seconde zone de transit le long de son bord de sortie, situé à l'opposé dudit bord d'entrée.

Afin de déplacer les produits vers et depuis la surface d'accumulation, il est donc prévu les première et seconde zones de transit disposées respectivement en amont entre ledit convoyeur d'entrée et la surface d'accumulation, et en aval, entre ladite surface d'accumulation et ledit convoyeur de sortie. Elles permettent d'assurer une circulation des produits selon un flux continu, malgré un transfert séquentiel desdits produits en colonnes respectivement vers et depuis la surface d'accumulation, par poussée d'une ou plusieurs colonnes selon un déplacement transversal par rapport au sens de circulation longitudinal des produits.

On notera qu'entre la surface d'accumulation et ces zones de transit, sont souvent positionnées des soles de glissement, constituant des surfaces fixes sur lesquelles sont transférés les produits.

Une contrainte récurrente réside dans ce transfert par poussée des produits aux niveaux des première et seconde zones de transit, vers ou depuis ladite surface d'accumulation, traversant des interfaces entre les différentes surfaces desdites zones, notamment via les soles de glissement constituant des surfaces intermédiaires immobiles. En effet, même en affleurement avec la surface d'accumulation et la première ou seconde zone de transit, la jonction avec la sole de glissement entraîne un risque d'accrochage du fond des produits lors de leur passage à ce niveau. De plus, les accélérations et décélérations provoquent des heurts, susceptibles de déséquilibrer les produits, voire de les faire chuter. De même, au cours du transfert sur chaque sole de glissement, la poussée induit un frottement des produits, un produit étant alors susceptible de se décaler ou encore une fois de perdre l'équilibre, de tomber, voire de se casser dans le cas d'un contenant en verre. En outre, la mise en contact contre les produits d'un organe destiné à assurer ladite poussée peut aussi provoquer un choc induisant un déséquilibre desdits produits au moment de leur transfert.

Une solution existante consiste à positionner un organe supplémentaire, parallèlement en vis-à-vis de l'organe de poussée, en vue d'encadrer la ou les colonnes de produits à transférer. En particulier, l'espacement entre les organes est déterminé en fonction de la largeur ou du diamètre des produits à transférer. Un tel espacement peut être prévu réglable en fonction de la dimension des produits, mais nécessite forcément un jeu fonctionnel pour assurer, d'une part, la circulation des produits entre les organes lorsqu'ils sont positionnés de part et d'autre le long d'un convoyeur et, d'autre part, en vue du déplacement vertical desdits outils, de façon descendante et de façon ascendante. En premier lieu, le jeu fonctionnel permet à l'outil de transfert de venir coiffer par le haut au moins une colonne de produits, sans les toucher pour ne pas risquer de les faire chuter. En second lieu, une fois les produits transférés, ledit jeu fonctionnel permet à l'outil d'être relevé pour revenir vers sa position d'origine en vue de transférer d'autres produits. Un tel jeu permet ainsi à l'outil de venir s'insérer et s'escamoter au niveau d'une ou plusieurs colonnes de produits, même si les produits appartenant à une même colonne ne sont pas parfaitement alignés, ce qui est généralement le cas en pratique.

Ainsi, un premier organe situé d'un côté d'une colonne des produits est espacé selon une première distance, tandis que l'organe situé du côté opposé de ladite colonne est espacé d'une seconde distance, lesdites première et seconde distances constituant le jeu fonctionnel susmentionné. Un tel dispositif ou procédé de transfert de produits vers ou depuis une surface d'accumulation est décrit au travers du document WO2018/065721. En particulier, le document WO2018/065721 décrit un procédé de transfert de produits vers ou depuis une surface d'accumulation selon le préambule de la revendication 1 et un dispositif de transfert de produits vers ou depuis une surface d'accumulation selon la revendication 8.

Ledit jeu fonctionnel entre les produits et les organes est prévu en principe au minimum de cinq millimètres, allant jusqu'à trente millimètres. Le plus souvent, ledit jeu fonctionnel est compris entre dix et vingt millimètres.

Généralement, le réglage de cet espacement est réalisé en début de production, notamment en fonction des dimensions et de la forme des produits à transférer et est conservé tout le temps de la production. Ce réglage s'opère généralement par rapprochement ou écartement des organes les uns par rapport aux autres. Cette opération est généralement effectuée à chaque changement du format des produits à transférer. Dès lors, après réglage, ce jeu fonctionnel est fixe et n'est plus modifié.

Toutefois, si le jeu fonctionnel nécessaire permet d'empêcher la chute de produits lors de leur transfert, il n'assure pas leur maintien en position au cours de leur transfert selon un déplacement transversal, pouvant entraîner un décalage de l'orientation ou du positionnement d'un ou plusieurs produits.

En particulier, si un décalage de produits survient en entrée au moment du déplacement depuis la première zone de transit vers la surface d'accumulation, alors l'alignement en colonne desdits produits est modifié. Il peut en résulter un problème en sortie au moment de transférer une telle colonne de produits désalignés depuis la zone d'accumulation vers la seconde zone de transit. En effet, les organes peuvent potentiellement heurter et donc engendrer des chutes, voire des casses de produits de ladite colonne ou d'une colonne adjacente.

En outre, le jeu fonctionnel induit une accélération et surtout une décélération prévues lentes lors des déplacements transversaux. En effet, ces vitesses dépendent des produits, de leur masse et de leur stabilité (provenant essentiellement de la forme de leur fond), générant proportionnellement un coefficient de frottement des fonds des produits sur les surfaces. La lenteur des accélérations mais surtout des décélérations permet de conserver l'alignement en colonne des produits. Il est alors impossible, avec un jeu fonctionnel d'opérer des transferts à une cadence élevée.

Une solution est décrite au travers du document FR 2 993 870, dans lequel le transfert des produits est accompagné par un outil sous forme de mâchoires, disposées de part et d'autre des groupes de produits à déplacer. Les mâchoires sont prévues toutes deux mobiles, pour passer d'une position écartée vers une position enserrant les produits, et inversement.

Si une telle solution permet de maintenir les produits au moment de leur transfert, elle présente toutefois un inconvénient lié aux déplacements des deux mâchoires l'une par rapport à l'autre, n'assurant pas un alignement des produits au moment de leur relâchement en dépose. En outre, les déplacements des deux mâchoires par rapport au bras robotisé et par rapport aux produits à transférer sont complexes à gérer.

L'invention a pour but de pallier les inconvénients de l'état de la technique en proposant le procédé de transfert de produits selon la revendication 1, assurant un maintien amélioré desdits produits au cours de leur déplacement transversal. En particulier, l'invention envisage d'enserrer chaque colonne de produits entre deux organes, au moment de leur transfert, avant ou pendant le déplacement transversal. Cet enserrement est prévu de sorte que lesdits organes se rapprochent des produits jusqu'à venir en-dessous dudit jeu fonctionnel, voire jusqu'à venir au contact des parois latérales des produits, sans pour autant leur appliquer une contrainte.

Il est toutefois à noter, que dans certains cas exceptionnels, notamment dans le convoyage de produits avec une enveloppe non rigide, de type sachet ou poche, il est possible d'enserrer lesdits produits jusqu'à exercer une contrainte, comme un pincement.

L' invention prévoit un enserrement avec un outil pourvu d'un organe fixe et d'un autre organe mobile par rapport audit organe fixe. Cet autre organe mobile par rapport à un organe fixe améliore et facilite l'étape consistant à saisir en enserrant les produits à transférer.

En effet, l'organe fixe transversalement par rapport à l'outil sert alors de paroi de référence. Cette référence assure notamment un alignement optimal des produits, au cours de leur transfert mais surtout au moment de leur relâchement en vue de leur dépose : on obtient alors une ligne parfaitement droite de produits. De plus, le référencement fixe par rapport à l'organe mobile simplifie considérablement la mécanique embarquée et facilite la gestion de l'automatisme au moment d'enserrer chaque colonne de produits, comme au moment de les relâcher, mais surtout si cette opération est réalisée au moment du déplacement transversal des produits au cours de leur transfert.

Ainsi, l'invention concerne un procédé de transfert de produits vers ou depuis une surface d'accumulation au sein d'une ligne de traitement en continu desdits produits selon la revendication 1, dans lequel :
- on alimente longitudinalement selon au moins une file de produits par un convoyeur d'entrée, une première zone de transit longeant un bord de ladite surface d'accumulation ;
- une seconde zone de transit approvisionne longitudinalement selon au moins une file de produits un convoyeur de sortie, ladite seconde zone de transit longeant le bord opposé de ladite surface d'accumulation ;
- on transfert au moins une colonne de produits par poussée transversale, depuis ladite première zone de transit vers ladite surface d'accumulation, ou bien depuis ladite zone d'accumulation vers ladite seconde zone de transit, au moyen d'un outil de transfert pourvu d'une pluralité d'organes s'étendant longitudinalement ;
- on dispose un organe de part et d'autre de chaque colonne de produits, un premier organe situé d'un côté d'une colonne desdits produits est espacé selon une première distance, tandis que l'organe situé du côté opposé de ladite colonne est espacé d'une seconde distance, lesdites première et seconde distances constituant le jeu fonctionnel, ledit jeu fonctionnel permettant à l'outil de transfert de venir coiffer par le haut au moins une colonne de produits;
caractérisé par le fait qu'au moment du transfert, on enserre chaque colonne de produits par rapprochement relatif desdits organes, au moins un premier organe étant fixe, tandis qu'au moins un deuxième organe est monté mobile par rapport audit premier organe fixe, et en ce que, en enserrement, chaque colonne de produits est espacée avec lesdits organes selon une distance inférieure audit jeu fonctionnel, cet enserrement par les organes permettant de maintenir les produits pour leur transfert, en minimisant voire en ne laissant aucun espace susceptible d'autoriser un décalage desdits produits.

Selon des caractéristiques additionnelles, aucunement limitatives, au sein d'un tel procédé de transfert, on peut enserrer chaque colonne avant ladite poussée transversale, alors que les produits sont arrêtés.

On peut enserrer chaque colonne de produits au cours de ladite poussée transversale.

Au moins deux organes peuvent être montés mobiles symétriquement par rapport audit premier organe fixe.

On peut déplacer selon une translation les organes entre eux parallèlement dans un plan horizontal.

Les organes peuvent être reliés entre eux au travers d'au moins deux bielles, lesdites bielles étant montées en pivotement sur chaque organe, de manière à former au moins un mécanisme à quatre barres de type parallélogramme déformable.

En enserrement chaque colonne de produits est espacée avec lesdits organes selon une distance inférieure au jeu fonctionnel.

Ladite distance peut être inférieure à cinq millimètres, de préférence comprise entre zéro et trois millimètres.

L'invention concerne aussi un dispositif de transfert de produits vers ou depuis une surface d'accumulation selon la revendication 8, en vue de la mise en œuvre dudit procédé de transfert.

Un tel dispositif de transfert comprend :
- une surface d'accumulation :
- une première zone de transit s'étendant au moins en partie le long d'un bord de ladite surface d'accumulation ;
- un convoyeur d'entrée d'alimentation en produits selon au moins une file, de ladite première zone de transit ;
- une seconde zone de transit s'étendant au moins en partie le long du bord opposé de ladite surface d'accumulation ;
- un convoyeur de sortie approvisionné en produits par ladite seconde zone de transit ;
- au moins un outil de transfert mobile transversalement assurant un déplacement par poussée transversale de chaque colonne de produits vers ou depuis ladite surface d'accumulation, respectivement depuis ladite première zone de transit ou vers ladite seconde zone de transit, ledit outil de transfert comprenant au moins deux organes parallèles espacés, de manière à encadrer chaque colonne de produits, un premier organe étant situé d'un côté d'une colonne desdits produits et espacé selon une première distance, tandis que l'organe situé du côté opposé de ladite colonne est espacé d'une seconde distance, lesdites première et seconde distances constituant le jeu fonctionnel;
caractérisé par le fait qu'il comprend des moyens d'actionnement desdits organes, depuis une position écartée vers une position rapprochée, selon une course en rapprochement assurant en position rapprochée une distance inférieure à un jeu fonctionnel entre lesdits organes et chaque colonne de produits, au moins un premier organe étant fixe, tandis qu'au moins un deuxième organe est monté mobile par rapport audit premier organe fixe et caractérisé par le fait que, en position rapprochée des organes, ladite distance est inférieure à cinq millimètres, de préférence comprise entre zéro et trois millimètres.

Selon d'autres caractéristiques additionnelles, non limitatives, au sein d'un tel dispositif de transfert, chaque outil peut comprendre au moins deux arbres montés en pivotement au niveau de chaque organe et mobiles inférieurement en rotation par rapport audit outil, de manière à constituer un mécanisme à quatre barres formant au moins un parallélogramme déformable.

Chaque organe peut se présenter sous la forme d'une plaque verticale orientée longitudinalement.

D'autres caractéristiques et avantages de l'invention ressortiront de la description détaillée qui va suivre des modes de réalisation non limitatifs de l'invention, en référence aux figures annexées dans lesquelles :

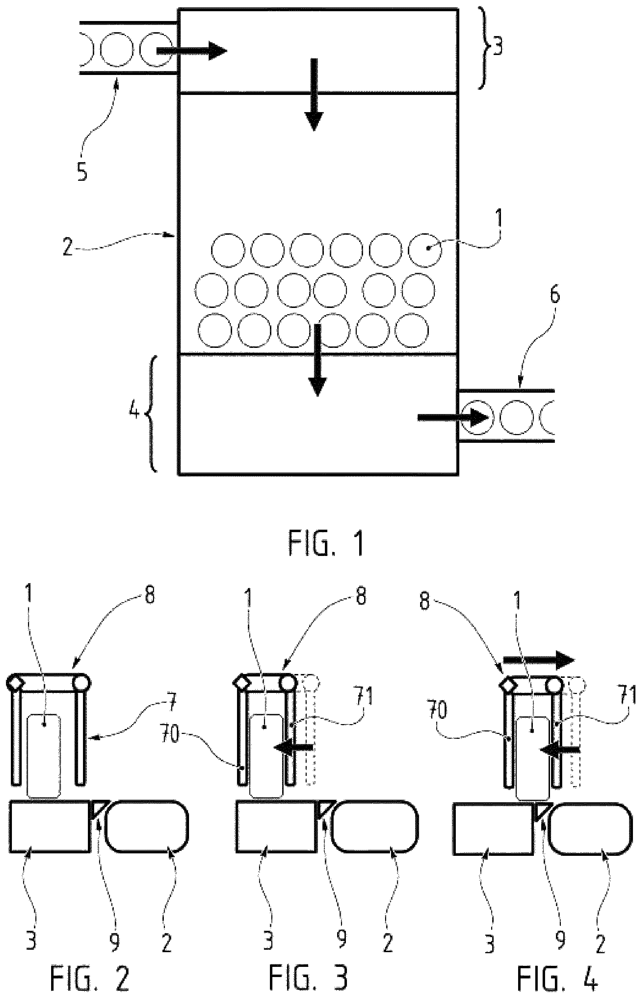

- la figure 1 représente schématiquement en élévation une vue de principe d'un exemple non limitatif d'une surface d'accumulation encadrée de deux première et seconde zones de transit de produits, acheminés via un convoyeur amont en entrée et un convoyeur aval en sortie ;
- la figure 2 représente schématiquement une vue simplifiée selon une coupe verticale, montrant avant enserrement une colonne des produits, dont un seul produit est visible, ladite colonne étant positionnée sur une zone de transit, notamment constituée par un convoyeur, adjacente à la sole de glissement et à la surface d'accumulation ;
- la figure 3 représente schématiquement une vue similaire à la figure 2, sur laquelle ledit enserrement est effectué avant transfert des produits ;
- la figure 4 représente schématiquement une vue similaire à la figure 2, sur laquelle ledit enserrement est effectué au cours du transfert des produits ;

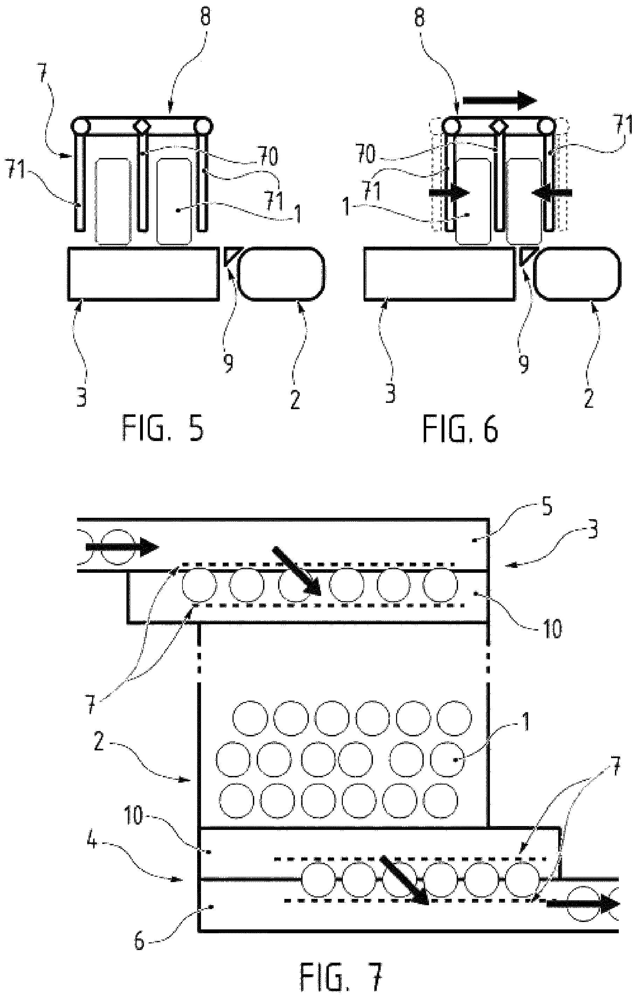

- la figure 5 représente schématiquement une vue simplifiée selon une coupe verticale, montrant avant enserrement deux colonnes de produits, un produit de chaque colonne étant visible, lesdites colonnes étant positionnées sur une zone de transit, notamment constituée par un convoyeur, adjacente à la sole de glissement et à la surface d'accumulation ;
- la figure 6 représente schématiquement une vue similaire à la figure 5, sur laquelle ledit enserrement est effectué symétriquement au moment du transfert des produits ;
- la figure 7 représente schématiquement une vue simplifiée en élévation d'un premier mode de réalisation, montrant un convoyeur d'entrée alimentant longitudinalement en produits une première zone de transit et un convoyeur de sortie approvisionné par une seconde zone de transit, sur lesquelles sont effectuées un double transfert des produits, par déplacements successifs ;

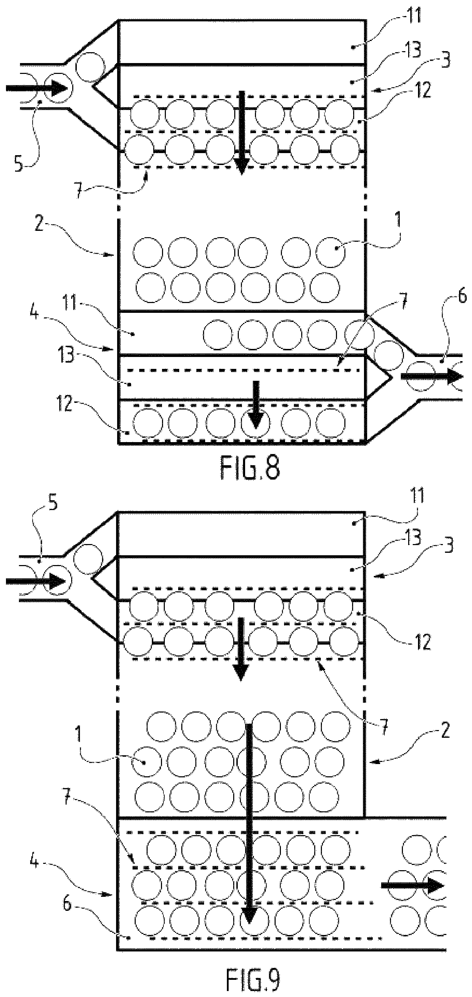

- la figure 8 représente schématiquement une vue simplifiée en élévation d'un deuxième mode de réalisation, montrant un convoyeur d'entrée séparant le flux de produits pour alimenter la première zone de transit pourvue de deux convoyeurs séparés par une plaque morte, et de façon similaire en sortie pour la seconde zone de transit ; et
- la figure 9 représente schématiquement une vue simplifiée en élévation d'un troisième mode de réalisation, montrant une première zone de transit similaire à celle de la figure 8, et une seconde zone de transit constituée par le convoyeur de sortie et dimensionnée pour recevoir trois colonnes de produits.

La présente invention concerne le transfert de produits 1 vers ou depuis une surface d'accumulation 2, au sein d'une ligne de traitement en continu desdits produits 1.

En particulier, comme représenté sur la figure 1, ladite surface d'accumulation 2 est encadrée par une première zone de transit 3 et une seconde zone de transit 4. La première zone de transit 3 s'étend le long d'un bord d'entrée de la surface d'accumulation 2, tandis que la seconde zone de transit 4 longe son bord de sortie opposé. Les zones 3,4 s'étendent donc parallèlement ou sensiblement parallèlement.

Dans le sens de circulation des produits, depuis l'amont vers l'aval, on alimente la première zone de transit 3 selon au moins une file desdits produits 1, de préférence selon une seule file, de façon frontale par un convoyeur d'entrée 5. Ledit convoyeur d'entrée 5 reçoit la file de produits 1 depuis un poste situé en amont au sein de la ligne de traitement. Sur l'exemple non limitatif de la figure 1, l'alimentation unifilaire s'effectue de la gauche vers la droite, longitudinalement ou parallèlement au bord d'entrée de ladite surface d'accumulation 2. On transfert ensuite des colonnes de produits 1 de chaque file selon un déplacement transversal depuis la première zone de transit 3 vers la surface d'accumulation 2. Le déplacement s'effectue donc transversalement par rapport au sens longitudinal de défilement des produits alimentant la première zone de transit 3. En d'autres termes, les colonnes de produits 1 sont déplacées dans un plan généralement horizontal, de préférence mais non limitativement orthogonalement par rapport à leur sens d'approvisionnement frontal, de manière à traverser les bords séparant la première zone de transit 3 et la surface d'accumulation 2 (comme visible sur la figure 1, du haut vers le bas). Les colonnes ainsi transférées sont alors acheminées sur la surface d'accumulation 2 jusqu'à la seconde zone de transit 4. Cet acheminement peut s'effectuer par des moyens adaptés, accompagnant en déplacement les colonnes, comme par exemple au travers d'un tapis à bande sans fin constituant ladite surface d'accumulation 2. En référence à la figure 1, ledit acheminement s'effectue du haut vers le bas. Un transfert est alors opéré depuis la surface d'accumulation 2 vers la seconde zone de transit 4, toujours selon un déplacement transversal, à savoir de préférence orthogonalement, par rapport au sens d'alimentation en produits au niveau du convoyeur d'entrée 5 (comme visible sur la figure 1, du haut vers le bas). Les colonnes traversent alors les bords séparant la surface d'accumulation 2 et la seconde zone de transit 4. Cette dernière approvisionne alors longitudinalement selon au moins une file de produits 1 un convoyeur de sortie 6 (comme visible sur la figure 1, de la gauche vers la droite). Ledit convoyeur de sortie 6 envoie alors les produits 1 vers un module situé en aval dans la ligne de traitement.

En somme, le déplacement transversal lors de chaque transfert de produits 1 comprend au moins une composante perpendiculaire à la direction longitudinale, à savoir la direction d'approvisionnement selon le convoyeur d'entrée 5.

Plus avant, le déplacement transversal lors de chaque transfert d'une ou plusieurs colonnes de produits 1 s'effectue par poussée transversale. Pour ce faire, on dispose des organes 7 dédiés de part et d'autre de chaque colonne. Chaque produit 1 d'une colonne se retrouve alors encadré par deux organes 7.

De tels organes 7 sont adaptés pour venir contre les produits 1 d'une même colonne et permettre leur poussée simultanée. Plus avant, c'est au moins un organe 7 situé en amont qui vient opérer la poussée, tandis que l'autre organe 7 situé en vis-à-vis retient les produits 1 au cours de leur déplacement transversal, limitant leur risque de chute.

Pour ce faire, chaque organe 7 peut se présenter sous forme d'un élément allongé, de préférence sous forme de plaque s'étendant verticalement et longitudinalement. La longueur de chaque organe 7 est configurée en fonction des dimensions de sa zone de transit 3,4 et de la surface d'accumulation 2, notamment pour venir balayer toute ou partie de leur longueur, assurant le déplacement transversal des produits 1. Dès lors, les organes 7 sont montés sur des moyens assurant leur mouvement, à savoir un outil de transfert 8 au moins mobile transversalement, toujours par rapport au sens d'alimentation des produits 1 en entrée. Lesdits organes 7 peuvent être montés suspendus au niveau de la partie inférieure de leur outil de transfert 8. La course de l'outil de transfert 8 s'effectue au-dessus des zones de transit 3,4 et de la surface d'accumulation 2. En particulier, un outil de transfert 8 est prévu au niveau de la première zone de transit 3 et un autre outil de transfert 8 au niveau de la seconde zone de transit 4, chacun ayant des cycles de déplacement et des courses dédiés.

Chaque outil de transfert 8 est aussi prévu mobile verticalement, assurant, d'une part, l'élévation des organes vers une position haute au-dessus de la zone de transit 3,4 et de la surface d'accumulation 2, à une hauteur suffisante pour que le bas des organes 7 ainsi soulevés ne viennent pas au contact du haut des produits 1. D'autre part, la mobilité verticale de l'outil de transfert 8 assure la descente depuis ladite position haute vers une position basse dans laquelle deux organes 7 encadrent une colonne de produits 1.

Plus avant, deux organes 7 sont montés espacés, selon une largeur dépendant du format de produits 1, en particulier de leur diamètre ou épaisseur. Cette largeur correspond en principe au diamètre des produits 1 traités, auquel s'ajoute un jeu fonctionnel, afin d'autoriser la montée et la descente desdits organes 7 sans venir au contact des produits 1. Ce jeu fonctionnel est constitué par une première distance située entre l'organe 7 et la paroi des produits 1 situés en amont et une deuxième distance située entre l'organe 7 opposé et la paroi opposée desdits produits 1 (i.e. situés en aval).

Un tel jeu fonctionnel peut être prévu réglable, manuellement ou automatiquement, au moment du lancement de la production et en fonction des dimensions des produits 1. Ledit jeu fonctionnel est généralement au minimum de cinq millimètres et au maximum de trente millimètres (entre 5 mm et 30 mm). De préférence le jeu fonctionnel est compris entre dix et vingt millimètres (entre 10 mm et 20 mm).

Avantageusement, l'invention prévoit au moment du transfert d'enserrer chaque colonne de produits 1 par rapprochement relatif desdits organes 7. En d'autres termes, chaque colonne étant encadrée par un couple de deux organes 7, on commande le rapprochement desdits organes 7.

Plus précisément, en fin de course, les organes 7 se retrouvent espacés selon une distance inférieure audit jeu fonctionnel. En position rapprochée des organes 7, cette distance est inférieure à cinq millimètres (5 mm), à savoir strictement inférieure à 5 mm. De préférence, cette distance est comprise entre zéro et trois millimètres (entre 0 mm et 3 mm).

En outre, lorsque ladite distance est nulle, alors les organes 7 viennent au contact des parois des produits 1. On notera que ce contact s'effectue sans appliquer de contrainte à l'intégrité des produits 1, sans pincement, à savoir sans déformer le conteneur constituant chacun desdits produits 1.

Dès lors, cet enserrement par les organes 7 permet de maintenir les produits 1 pour leur transfert, en minimisant voir en ne laissant aucun espace susceptible d'autoriser un décalage desdits produits 1. En outre, dans le cas d'un enserrement de part et d'autre contre les produits 1, le rapprochement assure la mise en alignement de chaque colonne, à savoir longitudinalement, selon la direction d'alimentation.

Ledit rapprochement de deux organes 7 s'effectue de façon relative, à savoir que le déplacement en rapprochement desdits organes 7 peut s'effectuer dans un référentiel centré sur les produits 1 à enserrer. En particulier, un des organes 7 se déplace par rapport à l'autre. Ce déplacement est possible du fait que l'un des organes 7 est monté mobile par rapport à l'outil de transfert 8 qui les soutient inférieurement.

Selon l'invention, au moins un premier organe 70 est fixe, tandis qu'au moins un deuxième organe 71 est monté mobile par rapport audit premier organe fixe 70. Une telle configuration est visible sur les figures 3 et 4, montrant un outil de transfert 8 équipé de deux organes 7 : le déplacement de l'organe mobile 71 situé à droite s'effectue en rapprochement vers l'organe fixe 70 à gauche.

Selon une autre configuration, généralement, lorsque l'outil de transfert 8 comporte plus de deux organes 7, notamment trois organes, comme visible sur les figures 5 et 6, le premier organe fixe 70 peut être situé au centre, tandis que deux autres organes mobiles 71 se trouvent de part et d'autre dudit premier organe fixe 70. Dès lors, les deux autres organes 70 sont montés mobiles symétriquement par rapport audit premier organe fixe 70. En outre, les courses des organes mobiles 71 peuvent être symétriquement similaires.

Des organes mobiles supplémentaires 71 peuvent être envisagés, en vue d'encadrer et d'assurer le resserrement de colonnes supplémentaires. La figure 9 montre en entrée trois organes 7, dont deux sont mobiles symétriquement par rapport à un organe central, tandis qu'en sortie un système différent comprend quatre organes 7 montés mobiles et venant enserrer trois colonnes au niveau de la seconde zone de transit 4.

Préférentiellement, le déplacement en rapprochement des organes 7 entre eux s'effectue selon une translation parallèlement dans un plan horizontal. En d'autres termes, chaque organe mobile 71 reste vertical et parallèle au cours de son rapprochement par rapport aux autres organes fixes 70 ou mobiles 71.

Afin d'obtenir un tel déplacement desdits organes 7, un premier mode de réalisation, non limitatif, prévoit de relier lesdits organes 7 entre eux au travers d'au moins deux arbres ou bielles, lesdites bielles étant montées en pivotement sur chaque organe 7, de manière à former au moins un mécanisme à quatre barres de type parallélogramme déformable. En outre, lesdites bielles sont montées et actionnées en rotation par ledit outil de transfert 8.

Plus précisément, chaque outil 8 comprend au moins deux arbres ou bielles montés en pivotement au niveau de chaque organe 7 et mobiles inférieurement en rotation par rapport audit outil 8.

Selon un autre mode de réalisation, lesdits organes 7 peuvent être montés sur des glissières parallèles entre elles et s'étendant selon une direction transversale, assurant ainsi la translation transversalement des organes 7. L'actionnement le long de telles glissières peut aussi être réalisé par l'intermédiaire dudit outil de transfert 8, notamment par des moyens de motorisation adaptés.

Selon l'invention, le déplacement en rapprochement relatif des organes 7 s'opère au moment du transfert des produits 1. En particulier, ledit déplacement en rapprochement relatif des organes 7 peut s'effectuer au début ou au cours du transfert depuis la première zone de transit 3 vers la surface d'accumulation 2, ou bien depuis ladite surface d'accumulation 2 vers la seconde zone de transit 4. Pour ce faire, on peut enserrer chaque colonne de produits 1 avant ladite poussée transversale, alors que lesdits produits 1 sont arrêtés, comme représenté sur l'exemple de la figure 3.

Alternativement, comme visible sur les figures 4 et 6, on peut enserrer chaque colonne de produits 1 au cours de ladite poussée transversale, alors que le déplacement de chaque colonne est en cours. Il en résulte avantageusement une cadence augmentée.

On notera que le déplacement en enserrement des organes 7 peut aussi être effectué en plusieurs étapes de déplacements par plusieurs poussées transversales successives au sein de la zone de transit 3,4, et entre ladite zone de transit 3,4 et la surface d'accumulation. Une telle possibilité est envisagée par exemple quand une zone de transit 3,4 est pourvue de plusieurs surfaces distinctes, destinées à recevoir et/ou transférer plusieurs colonnes de produits 1.

Entre chaque zone de transit 3,4 et la surface d'accumulation 2 peuvent être positionnées le long des bords contigus, au moins une sole de glissement 9. Une telle sole de glissement 9 constitue une surface fixe, essentiellement plane, en affleurement avec les surfaces situées de part et d'autre. Cette sole de glissement 9 est destinée à obturer le creux entre le bord de la zone de transit 3,4 et le bord adjacent de la surface d'accumulation 2, formant un arrondi notamment lorsque cette surface 2 est formée par un convoyeur à bande sans fin s'enroulant autour de rouleaux. Chaque sole de glissement 9 comble ainsi ce creux et cet arrondi, en formant une surface fixe, en affleurement, afin d'éviter que les produits 1 déplacés à cet endroit ne soient déséquilibrés et chutent, voire se brisent. Une telle sole de glissement 9 est visible sur les exemples des figures 2 à 6.

Chaque zone de transit 3,4 peut être configurée différemment, en fonction notamment du nombre de colonnes transférées, afin d'assurer la continuité de la circulation malgré les étapes de transfert par poussée transversale d'une ou plusieurs desdites colonnes.

Plusieurs configurations possibles de zones de transits 3,4 vont maintenant être détaillées, de façon non limitative.

Selon l'exemple représenté sur la figure 7, la première zone de transit 3 est constituée en partie par le convoyeur d'entrée 5, s'étendant alors sur toute ou partie de la longueur du bord d'entrée de la surface d'accumulation 2. De même, la seconde zone de transit 4 est constituée en partie par le convoyeur de sortie 6, s'étendant lui aussi longitudinalement et parallèlement au bord opposé de ladite surface d'accumulation 2. En outre, chaque zone de transit 3,4 est pourvue d'un convoyeur intermédiaire 10, s'étendant parallèlement et longitudinalement, entre la surface d'accumulation 2 et ledit convoyeur d'entrée 5 ou bien ledit convoyeur de sortie 6.

Chaque convoyeur intermédiaire permet de recevoir une colonne de produits 1 au cours d'une première étape de transfert au sein de ladite zone de transit 3,4. En particulier, au niveau de la première zone de transit 3, un convoyeur intermédiaire 10 est situé entre le convoyeur d'entrée 5 et la surface d'accumulation 2, ledit convoyeur intermédiaire 10 recevant une première colonne à partir de la file de produits 1 supportés par le convoyeur d'entrée 5. Cette première colonne est envoyée vers ledit convoyeur intermédiaire 10 au cours d'une première étape de transfert par poussée transversale en biais, alors qu'une autre colonne de la file continue d'avancer le long dudit convoyeur d'entrée 5. Pour ce faire, le convoyeur intermédiaire 10 est mis en mouvement, notamment de façon synchronisée avec le convoyeur d'entrée 5. Cette étape est particulièrement visible sur la figure 7. Une fois la première colonne déplacée sur le convoyeur intermédiaire 10, ce dernier est ralenti, voire arrêté en vue d'opérer une autre étape de transfert par poussée transversale orthogonalement depuis ledit convoyeur intermédiaire 10 vers la surface d'accumulation 2. Ainsi, le convoyeur d'entrée 5 conserve sa vitesse de fonctionnement au cours du transfert des produits 1, assurant ainsi une circulation continue des produits 1, alors que le convoyeur intermédiaire 10 fonctionne à une vitesse variable, notamment selon un mode marche à la même vitesse que le convoyeur d'entrée 5 / arrêt.

Au niveau de la seconde zone de transit 4, la configuration est similaire, à la différence qu'une colonne est déplacée transversalement et de façon orthogonale au cours d'une première étape de transfert depuis la surface d'accumulation 2 vers le convoyeur intermédiaire 10, situé entre la surface d'accumulation 2 et le convoyeur de sortie 6, alors ralenti, voire à l'arrêt. Ensuite, il est mis en mouvement, notamment de façon synchronisée avec le convoyeur de sortie 6, et cette colonne est transférée transversalement en biais au cours d'une autre étape de transfert vers ledit convoyeur de sortie 6, qui fonctionne en principe à une vitesse constante, permettant ainsi d'assurer un flux continu de produits 1.

Dans cette configuration, chaque outil de transfert 8 est équipé de deux organes 7 effectuant un enserrement d'une colonne de produits 1 au cours de l'une et/ou l'autre des étapes de transfert susmentionnées.

En entrée, cet enserrement s'effectue de préférence au moment du transfert depuis le convoyeur d'entrée 5 vers le convoyeur intermédiaire 10 après le début du déplacement transversal en biais, ou bien depuis le convoyeur intermédiaire 10 vers la surface d'accumulation 2, après le début du déplacement transversal orthogonal de manière à effectuer cette étape en temps masqué. Alternativement, l'enserrement peut avoir lieu au moment du transfert depuis le convoyeur intermédiaire 10 vers la surface d'accumulation 2 mais avant le début du déplacement transversal.

En sortie, un enserrement peut être effectué avant ou après le début du déplacement transversal orthogonal depuis la surface d'accumulation 2 vers le convoyeur intermédiaire 10, préférentiellement après. Alternativement, il peut être opéré au cours du déplacement transversal en biais depuis ledit convoyeur intermédiaire 10 vers le convoyeur de sortie 6. Dans ce dernier cas, le relâchement et l'écartement des organes 7 peut être commandé dès que les produits 1 transférés sont supportés par ledit convoyeur de sortie 6.

Selon l'exemple représenté sur la figure 8, les zones de transit 3,4 comprennent un premier convoyeur 11 et un second convoyeur 12, s'étendant parallèlement et longitudinalement. Ces convoyeurs 11,12 sont séparés par une plaque morte 13 d'une largeur suffisante pour recevoir des produits 1 selon une colonne.

Selon cette configuration, le convoyeur d'entrée 5, qui fonctionne en continu, alimente alternativement le premier et le second convoyeur 11,12 de la zone de transit 3, qui fonctionnement en principe de manière alternative. En particulier, le premier convoyeur 11 de la première zone de transit 3 est en route, notamment à la même vitesse que celle du convoyeur 5, lorsqu'il est alimenté selon une file de produits 1 par le convoyeur d'entrée 5 jusqu'à former une première colonne. Dès lors, la file est orientée vers le second convoyeur 12, tandis que le premier convoyeur 11 est arrêté. Une première étape de transfert de ladite première colonne peut alors s'effectuer par déplacement transversal, orthogonalement, depuis ledit premier convoyeur 11 vers la plaque morte 13 alors qu'une seconde colonne est en cours de formation sur le convoyeur 12 en fonctionnement. Une fois une seconde colonne formée au niveau dudit second convoyeur 12, ce dernier est mis à l'arrêt et l'alimentation s'alterne de nouveau vers le premier convoyeur 11, alors vide, qui est remis en marche, notamment de façon synchronisée avec le convoyeur d'entrée 5. Les première et seconde colonnes peuvent alors être simultanément transférées depuis la plaque morte 13 et le second convoyeur 12 vers la surface d'accumulation 2, par déplacement selon une poussée transversale, orthogonalement. Pendant ce temps, une nouvelle première colonne se forme au niveau du convoyeur 11.

Une opération similaire est effectuée au niveau de la seconde zone de transit 4. Une première et une seconde colonnes sont déplacées simultanément depuis la surface d'accumulation 2 respectivement vers un premier convoyeur 11 en principe à l'arrêt et une plaque morte 13, au cours d'une première étape de transfert. La première colonne est envoyée par le premier convoyeur 11 mis en marche, notamment à la même vitesse que celle du convoyeur de sortie 6, vers ce convoyeur 6 qui fonctionne normalement en continu et à vitesse constante, tandis que la seconde colonne est déplacée par poussée transversale vers le second convoyeur 12, en principe à l'arrêt, où elle sera envoyée vers le convoyeur de sortie 6 après ladite première colonne, dans sa continuité, par mise en marche, notamment synchronisée, dudit second convoyeur 12.

Dans cette configuration, chaque outil de transfert 8 peut être équipé de trois organes 7 effectuant un enserrement des deux colonnes de produits 1 au moment du transfert en entrée depuis la plaque morte 13 et le second convoyeur 12 vers la surface d'accumulation 2, ou bien en sortie depuis ladite surface d'accumulation 2 vers le premier convoyeur 11 et ladite plaque morte 13. Un enserrement peut aussi être éventuellement opéré au moment du transfert en entrée de la première colonne depuis le premier convoyeur 11 vers la plaque morte 13, ou bien en sortie depuis la plaque morte 13 vers ledit second convoyeur 12.

Chaque enserrement peut être opéré lors du transfert, avant le début du déplacement, lorsque les produits 1 ne bougent pas, les convoyeurs correspondant étant à l'arrêt, ou bien de préférence au cours du déplacement transversal, juste après le début de la poussée transversale, afin d'effectuer cette étape en temps masqué.

Selon l'exemple représenté sur la figure 9, le convoyeur d'entrée 5 alimente selon une file de produits 1 une première zone de transit 3 similaire à celle de l'exemple précédent. Toutefois, en sortie, la seconde zone de transit 4 est constituée intégralement, sur toute sa largeur, par le convoyeur de sortie 6. En outre, ledit convoyeur de sortie 6 est dimensionné pour recevoir plusieurs colonnes de produits 1, notamment, de façon non limitative, trois colonnes sur l'exemple représenté. Dès lors, les trois colonnes sont transférées simultanément depuis la surface d'accumulation 2 vers le convoyeur de sortie 6.

On notera alors que le convoyeur de sortie 6 peut être constitué par au moins deux sections de bandes, motorisées de façon distinctes, de manière à, d'une part, arrêter une première section en vis-à-vis du bord de sortie de la surface d'accumulation 2 en vue d'opérer le transfert des colonnes de produits 1, tandis qu'une autre section, ayant préalablement chargée des produits 1, se déplace vers un poste situé en aval pour les y décharger. Une fois le transfert opéré, la première section est mise en mouvement de manière à rattraper ladite autre section. Cette dernière, une fois à vide, va revenir avec une vitesse accrue jusqu'à venir en vis-à-vis du bord de sortie de la surface d'accumulation 2, où elle s'arrête pour recevoir les colonnes suivantes, et ainsi de suite. Tout comme les autres configurations de zones de transit 3,4 décrites ci-dessus, un tel dispositif permet de débiter un flux continu de produits 1 alors que le transfert est réalisé de manière séquentielle.

Dans cette configuration, l'outil de transfert 8 situé en sortie au niveau de la seconde zone de transit 4 est équipé de quatre organes 7 effectuant un enserrement desdites trois colonnes au moment dudit transfert. Un tel enserrement peut avoir lieu avant le début du déplacement transversal, mais préférentiellement après le début de la poussée transversale, afin d'opérer cette action en temps masqué.

En outre, une fois les transferts de chaque colonne effectués, on commande le relâchement des organes 7, annulant tout enserrement, jusqu'à revenir en position initiale, en écartement par rapport au précédent rapprochement en enserrement, selon le jeu fonctionnel requis. Cet écartement autorise, d'une part, la libération des produits 1 sans frottement le long des parois desdits organes situés de part et d'autre de chaque colonne, et d'autre part, la remontée puis la descente desdits organes 7 si cette opération est requise.

Ainsi, le rapprochement des organes 7 au moment du transfert de colonne de produits 1 aux niveaux des zones de transit 3,4 situées en entrée et en sortie d'une surface d'accumulation 2, assure un maintien amélioré desdits produits 1, limitant les risques de décalage ou de déséquilibre. Cet enserrement permet aussi d'augmenter les cadences de production, en augmentation les accélérations lors des déplacements en transferts des produits 1, mais surtout en ayant des décélérations plus fortes, sans aucun risque de chute des produits 1. En effet, les produits 1 sont alors maintenus de part et d'autre jusqu'à leur arrêt à la fin du transfert en déplacement transversal.

Un tel enserrement évite en outre tout risque de blocage du fond des produits 1, surtout pour des briques avec un fond à base parallélépipédique, aux niveaux des jonctions en affleurement entre les différentes surfaces, en particulier avec chaque sole de glissement 9. De plus, le mouvement d'un organe mobile 71 par rapport à un organe fixe 70 simplifie la gestion des déplacements, tout en assurant un alignement parfait des produits transférés à l'aide d'un tel dispositif.

## Revendications

1. Procédé de transfert de produits (1) vers ou depuis une surface d'accumulation (2) au sein d'une ligne de traitement en continu desdits produits (1), dans lequel :
- on alimente longitudinalement selon au moins une file de produits (1) par un convoyeur d'entrée (5), une première zone de transit (3) longeant un bord de ladite surface d'accumulation (2) ;
- une seconde zone de transit (4) approvisionne longitudinalement selon au moins une file de produits (1) un convoyeur de sortie (6), ladite seconde zone de transit (4) longeant le bord opposé de ladite surface d'accumulation (2) ;
- on transfert au moins une colonne de produits (1) par poussée transversale à l'alimentation longitudinalement, depuis ladite première zone de transit (3) vers ladite surface d'accumulation (2), ou bien depuis ladite surface d'accumulation (2) vers ladite seconde zone de transit (4), au moyen d'un outil de transfert (8) pourvu d'une pluralité d'organes (7) s'étendant longitudinalement ;
- on dispose un organe (7) de part et d'autre de chaque colonne de produits (1), un premier organe (70) situé d'un côté d'une colonne desdits produits (1) est espacé selon une première distance, tandis qu'un deuxième organe (71) situé du côté opposé de ladite colonne est espacé d'une seconde distance, lesdites première et seconde distances constituant un jeu fonctionnel, ledit jeu fonctionnel permettant à l'outil de transfert de venir coiffer par le haut au moins une colonne de produits sans les toucher pour ne pas risquer de les faire chuter;
**caractérisé par le fait qu'**au moment du transfert, on enserre chaque colonne de produits (1) par rapprochement relatif desdits organes (7), le premier organe (70) étant fixe, tandis que le deuxième organe (71) est monté mobile par rapport audit premier organe fixe (70), et en ce que, en enserrement, chaque colonne de produits (1) est espacée avec lesdits organes (7) selon une distance inférieure audit jeu fonctionnel, cet enserrement par les organes (7) permettant de maintenir les produits (1) pour leur transfert, en minimisant voire en ne laissant aucun espace susceptible d'autoriser un décalage desdits produits (1).

2. Procédé de transfert selon la revendication 1, **caractérisé par le fait qu'**on enserre chaque colonne avant ladite poussée transversale, alors que les produits (1) sont arrêtés.

3. Procédé de transfert selon la revendication 1, **caractérisé par le fait qu'**on enserre chaque colonne de produits (1) au cours de ladite poussée transversale.

4. Procédé de transfert selon la revendication 1,
**caractérisé par le fait qu'**au moins deux organes (71) sont montés mobiles symétriquement par rapport audit premier organe fixe (70).

5. Procédé de transfert selon l'une quelconque des revendications précédentes, **caractérisés par le fait qu'**on déplace selon une translation les organes (7) entre eux parallèlement dans un plan horizontal.

6. Procédé de transfert selon la revendication 5, **caractérisé par le fait que** les organes (7) sont reliés entre eux au travers d'au moins deux bielles, lesdites bielles étant montées en pivotement sur chaque organe (7), de manière à former au moins un mécanisme à quatre barres de type parallélogramme déformable.

7. Procédé de transfert selon l'une quelconque des revendications précédentes, **caractérisé par le fait que** ladite distance est inférieure à cinq millimètres, de préférence comprise entre zéro et trois millimètres.

8. Dispositif de transfert de produits (1) vers ou depuis une surface d'accumulation (2), au sein d'une ligne industrielle de traitement continu desdits produits (1), pour la mise en œuvre du procédé de transfert selon l'une quelconque des revendications précédentes, ledit dispositif de transfert comprenant :
- une surface d'accumulation (2) ;
- une première zone de transit (3) s'étendant au moins en partie le long d'un bord de ladite surface d'accumulation (2) ;
- un convoyeur d'entrée (5) d'alimentation en produits (1) selon au moins une file, de ladite première zone de transit (3) ;
- une seconde zone de transit (4) s'étendant au moins en partie le long du bord opposé de ladite surface d'accumulation (2) ;
- un convoyeur de sortie (6) approvisionné en produits (1) par ladite seconde zone de transit (4) ;
- au moins un outil de transfert (8) mobile transversalement assurant un déplacement par poussée transversale de chaque colonne de produits (1) vers ou depuis ladite surface d'accumulation (2), respectivement depuis ladite première zone de transit (3) ou vers ladite seconde zone de transit (4), ledit outil de transfert (8) comprenant au moins deux organes (7) parallèles espacés, de manière à encadrer chaque colonne de produits (1), un premier organe (70) étant situé d'un côté d'une colonne desdits produits (1) et espacé selon une première distance, tandis qu'un deuxième organe (71) situé du côté opposé de ladite colonne est espacé d'une seconde distance, lesdites première et seconde distances constituant un jeu fonctionnel ;
**caractérisé par le fait qu'**il comprend des moyens d'actionnement desdits organes (7), depuis une position écartée vers une position rapprochée, selon une course en rapprochement assurant en position rapprochée une distance inférieure audit jeu fonctionnel entre lesdits organes (7) et chaque colonne de produits (1), le premier organe (70) étant fixe, tandis que le deuxième organe (71) est monté mobile par rapport audit premier organe fixe (70) et **caractérisé par le fait que**, en position rapprochée des organes (7), ladite distance est inférieure à cinq millimètres, de préférence comprise entre zéro et trois millimètres.

9. Dispositif de transfert selon la revendication 8, **caractérisé en ce que** chaque outil (8) comprend au moins deux arbres montés en pivotement au niveau de chaque organe (7) et mobiles inférieurement en rotation par rapport audit outil (8), de manière à constituer un mécanisme à quatre barres formant au moins un parallélogramme déformable.

10. Dispositif de transfert selon l'une quelconque des revendications 8 ou 9, **caractérisé par le fait que** chaque organe (7) se présente sous la forme d'une plaque verticale orientée longitudinalement.

## Patentansprüche

1. Verfahren zum Überführen von Produkten (1) zu oder aus einer Speicherfläche (2) innerhalb einer kontinuierlichen Verarbeitungslinie für die Produkte (1), wobei:
- ein erster Transitbereich (3), der an einen Rand der Speicherfläche (2) angrenzt, durch einen Zuförderer (5) gemäß mindestens einer Reihe von Produkten (1) in Längsrichtung versorgt wird;
- ein zweiter Transitbereich (4) einen Abförderer (6) gemäß mindestens einer Reihe von Produkten (1) in Längsrichtung beschickt, wobei der zweite Transitbereich (4) an den entgegengesetzten Rand der Speicherfläche (2) angrenzt;
- mindestens eine Folge von Produkten (1) durch eine Verschiebung quer zu der Versorgung in Längsrichtung mit Hilfe eines Überführungswerkzeugs (8), das über eine Vielzahl von sich in Längsrichtung erstreckenden Organen (7) verfügt, von dem ersten Transitbereich (3) zu der Speicherfläche (2) oder aber von der Speicherfläche (2) zu dem zweiten Transitbereich (4) überführt wird;
- zu beiden Seiten jeder Folge von Produkten (1) ein Organ (7) angeordnet wird, ein erste Organ (70), das sich auf einer Seite einer Folge der Produkte (1) befindet, um einen ersten Abstand beabstandet ist, während ein zweites Organ (71), das sich auf der entgegengesetzten Seite der Folge befindet, um einen zweiten Abstand beabstandet ist, wobei der erste und der zweite Abstand ein funktionales Spiel bilden, wobei das funktionale Spiel dem Überführungswerkzeug ermöglicht, mindestens eine Folge von Produkten von oben zu umschließen, ohne sie zu berühren, um nicht Gefahr zu laufen, sie umzustoßen;
**dadurch gekennzeichnet, dass** zum Zeitpunkt der Überführung jede Folge von Produkten (1) durch relatives Annähern der Organe (7) eingefasst wird, wobei das erste Organ (70) fest ist, während das zweite Organ (71) in Bezug auf das erste feste Organ (70) beweglich angebracht ist, und dass, im eingefassten Zustand, jede Folge von Produkten (1) zu den Organen (7) um einen Abstand beabstandet ist, der kleiner als das funktionale Spiel ist, wobei dieses Einfassen durch die Organe (7) es ermöglicht, die Produkte (1) für ihre Überführung zu halten, indem ein Raum, der einen Versatz der Produkte (1) zulassen könnte, minimiert oder sogar ausgeschlossen wird.

2. Überführungsverfahren nach Anspruch 1, **dadurch gekennzeichnet, dass** jede Folge im Vorfeld der Querverschiebung, wenn die Produkte (1) gerade gestoppt sind, eingefasst wird.

3. Überführungsverfahren nach Anspruch 1, **dadurch gekennzeichnet, dass** jede Folge von Produkten (1) während der Querverschiebung eingefasst wird.

4. Überführungsverfahren nach Anspruch 1, **dadurch gekennzeichnet, dass** mindestens zwei Organe (71) in Bezug auf das erste feste Organ (70) symmetrisch beweglich angebracht sind.

5. Überführungsverfahren nach einem der vorhergehenden Ansprüche, **dadurch gekennzeichnet, dass** die Organe (7) untereinander parallel in einer horizontalen Ebene translatorisch bewegt werden.

6. Überführungsverfahren nach Anspruch 5, **dadurch gekennzeichnet, dass** die Organe (7) untereinander durch mindestens zwei Stangen verbunden sind, wobei die Stangen schwenkbar an jedem Organ (7) angebracht sind, um so mindestens einen Mechanismus mit vier Stäben vom Typ verformbares Parallelogramm zu bilden.

7. Überführungsverfahren nach einem der vorhergehenden Ansprüche, **dadurch gekennzeichnet, dass** der Abstand weniger als fünf Millimeter, vorzugsweise zwischen null und drei Millimeter, beträgt.

8. Vorrichtung zur Überführung von Produkten (1) zu oder aus einer Speicherfläche (2) innerhalb einer kontinuierlichen industriellen Verarbeitungslinie für die Produkte (1) zur Umsetzung des Überführungsverfahrens nach einem der vorhergehenden Ansprüche, wobei die Überführungsvorrichtung Folgendes beinhaltet:
- eine Speicherfläche (2);
- einen ersten Transitbereich (3), der sich mindestens teilweise entlang eines Randes der Speicherfläche (2) erstreckt;
- einen Zuförderer (5) zur Versorgung des ersten Transitbereichs (3) mit Produkten (1) gemäß mindestens einer Reihe;
- einen zweiten Transitbereich (4), der sich mindestens teilweise entlang des entgegengesetzten Randes der Speicherfläche (2) erstreckt;
- einen Abförderer (6), der durch den zweiten Transitbereich (4) mit Produkten (1) beschickt wird;
- mindestens ein Überführungswerkzeug (8), das in Querrichtung beweglich ist und durch Querverschiebung eine Bewegung jeder Folge von Produkten (1) zu oder aus der Speicherfläche (2) bzw. aus dem ersten Transitbereich (3) oder zu dem zweiten Transitbereich (4) gewährleistet, wobei das Überführungswerkzeug (8) mindestens zwei beabstandete parallele Organe (7) beinhaltet, um jede Folge von Produkten (1) einzurahmen, wobei sich ein erstes Organ (70) auf einer Seite einer Folge der Produkte (1) befindet und um einen ersten Abstand beabstandet ist, während ein zweites Organ (71), das sich auf der entgegengesetzten Seite der Folge befindet, um einen zweiten Abstand beabstandet ist, wobei der erste und der zweite Abstand ein funktionales Spiel bilden;
**dadurch gekennzeichnet, dass** sie Mittel zum Betätigen der Organe (7) von einer entfernten Position in eine angenäherte Position gemäß einem Annäherungsweg beinhaltet, die in der angenäherten Position einen Abstand kleiner als das funktionale Spiel zwischen den Organen (7) und jeder Folge von Produkten (1) gewährleisten, wobei das erste Organ (70) fest ist, während das zweite Organ (71) in Bezug auf das erste feste Organ (70) beweglich angebracht ist, und **dadurch gekennzeichnet, dass** der Abstand in der angenäherten Position der Organe (7) weniger als fünf Millimeter, vorzugsweise zwischen null und drei Millimeter, beträgt.

9. Überführungsvorrichtung nach Anspruch 8, **dadurch gekennzeichnet, dass** jedes Werkzeug (8) mindestens zwei Achsen beinhaltet, die schwenkbar an jedem Organ (7) angebracht sind und in Bezug auf das Werkzeug (8) unten drehbar sind, um so einen Mechanismus mit vier Stäben zu bilden, der mindestens ein verformbares Parallelogramm bildet.

10. Überführungsvorrichtung nach einem der Ansprüche 8 oder 9, **dadurch gekennzeichnet, dass** jedes Organ (7) in Form einer längs ausgerichteten vertikalen Platte vorliegt.

## Claims

1. Method for transferring products (1) to or from a collecting surface (2) within a line for the continuous processing of said products (1), wherein:
- a first transit zone (3) bordering one edge of said collecting surface (2) is fed longitudinally with at least one file of products (1) by an entry conveyor (5);
- a second transit zone (4) supplies at least one file of products (1) longitudinally to an exit conveyor (6), said second transit zone (4) bordering the opposite edge of said collecting surface (2);
- at least one column of products (1) is transferred, by being pushed transversely with respect to the longitudinal feed, from said first transit zone (3) to said collecting surface (2), or from said collecting surface (2) to said second transit zone (4), by means of a transfer tool (8) provided with a plurality of members (7) extending longitudinally;
- a member (7) is disposed on either side of each column of products (1), a first member (70) situated on one side of a column of said products (1) is spaced apart by a first distance while a second member (71) situated on the opposite side of said column is spaced apart by a second distance, said first and second distances constituting a functional clearance, said functional clearance allowing the transfer tool to cover the top of at least one column of products without touching them so as not to risk them falling over;
**characterized in that**, at the moment of transfer, each column of products (1) is gripped by said members (7) being moved towards one another, the first member (70) being fixed, while the second member (71) is mounted in a movable manner with respect to said fixed first member (70), and **in that**, when gripped, each column of products (1) is spaced apart from said members (7) by a distance less than said functional clearance, this gripping by the members (7) making it possible to hold the products (1) for their transfer, minimizing or leaving no space liable to allow said products (1) to shift.

2. Transfer method according to Claim 1, **characterized in that** each column is gripped before said transverse push, while the products (1) are at a standstill.

3. Transfer method according to Claim 1, **characterized in that** each column of products (1) is gripped during said transverse push.

4. Transfer method according to Claim 1, **characterized in that** at least two members (71) are mounted in a movable manner symmetrically with respect to said fixed first member (70).

5. Transfer method according to any one of the preceding claims, **characterized in that** the members (7) are moved in translation in a parallel manner to one another in a horizontal plane.

6. Transfer method according to Claim 5, **characterized in that** the members (7) are connected together by way of at least two link rods, said link rods being mounted in a pivotable manner on each member (7), so as to form at least one four-bar linkage of the deformable parallelogram type.

7. Transfer method according to any one of the preceding claims, **characterized in that** said distance is less than five millimetres, preferably between zero and three millimetres.

8. Device for transferring products (1) to or from a collecting surface (2), within an industrial line for the continuous processing of said products (1), for implementing the transfer method according to any one of the preceding claims, said transfer device comprising:
- a collecting surface (2);
- a first transit zone (3) extending at least partially along one edge of said collecting surface (2);
- an entry conveyor (5) for feeding products (1) in at least one file to said first transit zone (3);
- a second transit zone (4) extending at least partially along the opposite edge of said collecting surface (2);
- an exit conveyor (6) that is supplied with products (1) by said second transit zone (4);
- at least one transversely movable transfer tool (8) that moves each column of products (1), by pushing them transversely, to or from said collecting surface (2), from said first transit zone (3) or to said second transit zone (4), respectively, said transfer tool (8) comprising at least two members (7) that are spaced apart in parallel, so as to flank each column of products (1), a first member (70) being situated on one side of a column of said products (1) and spaced apart by a first distance, while a second member (71) situated on the opposite side of said column is spaced apart by a second distance, said first and second distances constituting a functional clearance;
**characterized in that** it comprises means for actuating said members (7), from a spaced-apart position to a close-together position, over a closing travel ensuring, in the close-together position, a distance less than said functional clearance between said members (7) and each column of products (1), the first member (70) being fixed, while the second member (71) is mounted in a movable manner with respect to said fixed first member (70), and **characterized in that**, in the close-together position of the members (7), said distance is less than five millimetres, preferably between zero and three millimetres.

9. Transfer device according to Claim 8, **characterized in that** each tool (8) comprises at least two shafts that are mounted in a pivotable manner at each member (7) and are rotatable at the bottom with respect to said tool (8), so as to constitute a four-bar linkage forming at least one deformable parallelogram.

10. Transfer device according to either one of Claims 8 and 9, **characterized in that** each member (7) is in the form of a longitudinally oriented vertical plate.
